# EUROPEAN PATENT APPLICATION

(11) **EP 2 405 352 A1**
(43) Date of publication of application: **11.01.2012**
(21) Application number: 10168823.2
(22) Date of filing: 08.07.2010
(51) Int. Cl.: G06F 9/45, G06F 11/34, G06F 11/36

(54) **Instrumentation of proprietary software libraries**

(71) Applicant: FUJITSU LIMITED, Kawasaki-shi, Kanagawa 211-8588 (JP)
(72) Inventor: Li, Michael, Hayes,, Middlesex UB4 8FE (GB)
(74) Representative: Stebbing, Timothy Charles

(57) **Abstract**

A compiler allowing access to proprietary libraries for instrumentation purposes. At a vendor (50) side, the compiler is modified so that different portions of the proprietary source code (S10) are compiled to different stages (S12, S14) and these portions are saved to disk (S16) as a combination of both higher and lower intermediate representations, assembly and object code portions for distribution to an external software developer or end-user (60), who is then able to instrument and perform custom optimization (S18) of the proprietary library.

## Description

The present invention relates to instrumentation of computer programs which use proprietary libraries.

Instrumentation is a technical process carried out on computer programs in order to check that the program performs correctly when deployed in a production or industrial capacity. Instrumentation is a computer implemented process which changes the character of a computer program, capable of performing some industrial function, and produces a second program containing additional code in comparison with the original program, with the new primary function of evaluating the correctness and efficiency of the original program.

Development of a new computer program normally involves writing specific modules of code to carry out high-level or bespoke functions along with the use of proprietary libraries containing modules to carry out low-level, standard functions, these modules being "called" by the newly-written modules. Thus, a vendor (for example, a manufacturer of a computer system and/or of its operating system software) may make available proprietary libraries in addition to other programming tools such as compilers. Such proprietary libraries contain a number of standard modules or functions for use by third parties, in other words developers and/or end users, to reduce the programming burden. As an example, many libraries are available for use with GCC (GNU Compiler Collection), which is the most common compiler set used in computer systems running Unix and Unix-derivatives.

The programmer at the developer or end-user compiles his own code (written in source code using a high-level language) to produce object code (also called "machine code" or "binary") and then links this object code to any libraries being used, these being distributed already in object code form. The linked user object code and libraries together form an executable file, usually simply called an "executable".

However, using libraries in this way makes the resulting program harder to instrument, because instrumentation generally requires access to the source code. Proprietary source code is important intellectual property that is rarely ever released to the end-user of the software, or external developers that employ a vendor's proprietary software library. This means it is not possible for the developer to instrument and make other modifications early in the processing of the source code, for example at the compilation or byte-code compilation stage. One exemplary reason a developer would want to instrument his program along with a proprietary library is to find uses of uninitialized variables and memory leaks in the developer's code even when variables and memory are processed in the proprietary library. Thus, there is a need for a technique which allows instrumentation of proprietary libraries but without disclosing their source code.

According to a first aspect of the present invention, there is provided a method of distributing software for instrumentation comprising: creating source code of the software; compiling the source code into a plurality of portions having different representations, at least one of said representations being suited to instrumentation; and distributing the software with said portions having different representations.

The distributing may involve saving the software to disk or making the software available for download. By compiling the software to different representations or stages in this way, the recipient (a developer or end-user) may add instrumentation more easily, at least to appropriate portions of the code, in comparison with a distributable wholly in the form of object code.

Preferably, the software is in the form of one or more proprietary libraries. Typically each library will contain a plurality of modules or functions arranged in a hierarchy so that a function arranged at a higher level may call one or more functions at a lower level. The plurality of portions having different representations preferably correspond to distinct functions in such a structure, such that different functions may have different representations. There may be many such functions, so that a respective set of functions exists in each representation.

Known compilation processes create so-called intermediate representations as intermediate coding forms prior to a final compilation stage. Preferably, the different representations within the distributable include one or more of these intermediate representations generated during said compiling.

Such intermediate representations may include an abstract syntax tree, and/or a compiler-dependent intermediate representation. For example, such intermediate representations may be employed for portions of the software containing higher-level functions in the hierarchical structure.

Other possible representations include assembly code, virtual machine-executable code, and/or object code. For example, such other representations may be employed for portions of the software containing lower-level functions in the hierarchical structure, and particularly for portions whose original source code the distributor wishes to keep secret.

Preferably, the distributing comprises providing a file structure for said portions having different representations which reflects the hierarchical structure of the constituent functions. This hierarchical file structure may be based on Executable and Linkable Format (ELF). The distributing may involve writing the software to a disk using the hierarchical file structure.

The method may further comprise distributing the software in the form of a wholly object code version, in addition to distributing the software with said portions having different representations.

According to a second aspect of the present invention, there is provided a computer system for forming a distributable software product by compiling object code from source code via a plurality of intermediate representations and comprising: a processor configured as: a first compiling stage for producing an output in the form of a first intermediate representation, from the source code; a second compiling stage for producing an output in the form of a second intermediate representation, from the first intermediate representation; and a final compiling stage for producing an output in the form of object code, from a said intermediate representation at or following said second stage; and a storage for storing the output of each of said stages; wherein the processor is arranged to combine a portion of the output from a plurality of said stages to form said distributable software product.

Thus, the storage in the computer system does not merely store the intermediate representations temporarily during the compilation process, but retains at least sections of code in the intermediate states, the processor selecting some or all of these intermediate representations to construct the distributable product.

The computer system may be arranged to perform any of the above methods.

Such a computer system is used, for example, by a software vendor for distributing software such as libraries to third parties. There may be any number, or none, of stages between the second and final compiling stages.

According to a third aspect of the present invention, there is provided a computer system for instrumenting a proprietary library and comprising: storage means arranged for storing the proprietary library in a form in which portions of the proprietary library have different representations, at least one of said representations allowing instrumentation to be added; compiling means configured to perform a plurality of compile processes each provided for a respective one of said different representations; and instrumenting means for adding, in the respective compile process, instrumentation to each portion of the proprietary library which is in a representation allowing instrumentation.

Such a computer system may be used, for example, by a third party in the form of a developer or end-user, for allowing the proprietary library code to be instrumented along with the third party's own code.

According to a fourth aspect of the present invention, there is provided a compiler for forming a software product by creating object code from source code via a plurality of intermediate representations and comprising: a first processing stage for producing an output in the form of a first intermediate representation, from the source code; a second processing stage for producing an output in the form of a second intermediate representation, from the first intermediate representation; and a final stage for producing an output in the form of object code, from a said intermediate representation at or following said second stage; wherein said compiler is arranged to combine a portion of the output from each of said stages to form said software product.

Such a compiler is primarily intended for use in generating a software product in the form of a proprietary library for use by a third-party recipient (developer or end-user). The compiler may be provided on a computer-readable medium, or downloaded over a network such as the Internet.

The present invention also covers a compiler used by the recipient of such a proprietary library.

Thus, a further aspect of the present invention provides a compiler for instrumenting a proprietary library, the compiler comprising: a plurality of compile stages each adapted to process code having a different respective representation, at least one of which representations allows instrumentation to be added; a loader for loading the proprietary library and identifying portions of the proprietary library having different representations; and instrumenting means for adding instrumentation to each portion of the proprietary library which is in a representation allowing instrumentation.

The above compiler may be combined with the previously defined compiler in the fourth aspect, or may be a separate compiler. Again, the compiler may be provided on a computer-readable medium, or downloaded over a network such as the Internet. An example of a computer-readable medium is a write-once optical disk such as a DVD-R.

By means of the above-mentioned techniques, proprietary software libraries can be provided to a developer and/or end-user in a form that allows the developer/end-user to instrument and perform low level modifications of the proprietary library without revealing trade secrets and so that the source code cannot be feasibly recovered.

As already indicated, an embodiment of the present invention may provide a compiler for use by a developer or end-user of software and allowing access to proprietary libraries. The compiler is modified so that different portions of the proprietary source code are compiled to different stages and these portions are saved to disk as a combination of both higher and lower intermediate representations, assembly and object code portions. Intermediate representations tend to occupy a great deal of storage space in comparison with object code. In comparison with saving the whole of the code in the form of an intermediate representation, the multi-stage portions allow reduced disk space usage when delivered to the external software developer or end-user who is then able to instrument and perform custom optimization of the proprietary library.

Reference is made, by way of example only, to the accompanying drawings in which:
Figure 1 shows a conventional computer system;
Figure 2a shows a conventional method of distributing software, such as a proprietary library, from a vendor to a developer or end-user;
Figure 2b schematically shows a computer system on the vendor side in the method of Figure 2a;
Figure 2c schematically shows a computer system on the developer or end-user side in the method of Figure 2a;
Figure 3a shows a method embodying the present invention for distributing proprietary library from a vendor to a developer or end-user;
Figure 3b schematically shows a computer system on the vendor side in the method of Figure 3a;
Figure 3c schematically shows a computer system on the developer or end-user side in the method of Figure 3a;
Figure 4 illustrates results of instrumenting a proprietary library; and
Figure 5 illustrates a distribution format suitable for use with the present invention.

Before explaining an embodiment of the present invention, some further background will first be given.

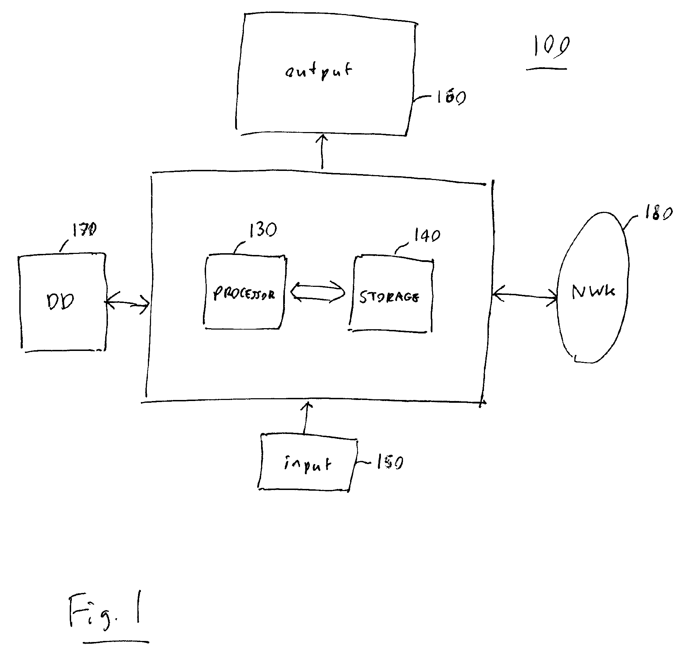

Figure 1 illustrates main components of a conventional computer system. A processor or CPU 130, in conjunction with storage 140, executes program code in order to carry out some task, such as compiling another program. Operations of the computer system are controlled via an input device 150 such as a mouse and/or keyboard, and results of processing are output to some form of output device 160 such as a display screen. The results of processing may also be saved to disk using a disk drive DD 170, and/or transmitted to the outside via a network NWK 180.

Typically, the processor is required to perform several tasks simultaneously; for example, when compiling source code it is frequently desired to perform instrumentation, in other words to add specific instrumenting code (such as entry and exit function calls attached to subroutines within the program) for the purposes of evaluating the program's correctness and efficiency. The instrumenting code may, for example, briefly interrupt execution of the program, perform checking, and report the nature of any errors detected. In addition, prior to compiling the source code, preprocessing is often performed to remove redundant spaces, comments and so on, and to give effect to preprocessor directives.

Compile-time is the most common point at which instrumentation is performed and the resulting application binary will have high performance relative to other approaches but this requires access to the source code.

A basic method of instrumentation is callgraph execution profiling: a program is instrumented to monitor and record details during execution so that call counts and times can be correctly attributed to functions and function arcs. This functionality is found in all major C/C++/Fortran compilers. The instrumented code will produce output which is further processed to give user-readable output. The importance of instrumentation is demonstrated by tools such as Scalasca, CrayPat, gprof and fprof.

In the absence of the source code, instrumentation may be performed at run-time by dynamic binary instrumentation (DBI) wherein intermediate representations are recovered piece-by-piece during execution, instrumented, re-compiled in just-in-time fashion, and executed on the CPU. This strategy is taken by DBI tools such as Valgrind memcheck, a tool which is able to track uninitialized variables and sources of memory leaks; however, an unavoidable and severe performance penalty is imposed by this method. Thus, wall time (the actual time elapsed between start and finish of the program, including time spent waiting for I/O and so forth) may be greatly increased over that for the uninstrumented code.

As already mentioned, modern software development relies on libraries which provide re-usable code for performing frequently-used functions, thereby freeing the developer from the need to code such functions from scratch. It is usually impossible for an end-user or a developer using an external vendor's proprietary library to instrument the proprietary library or to make other low level modifications.

Currently, fine-grain low level modifications may be made using a combination of preprocessor directives in the case of C/C++/Fortran and compiler flags (these together would control optimization, parallelization, hard-coded code-paths and use of technologies such as OpenMP and OpenCL. OpenMP allows programs to run in parallel on multiple processors, whilst OpenCL allows use of a personal computer's GPU - graphics processing unit - in addition to its CPU, to execute a program). Once past the preprocessor stage, many of these choices are fixed. As the source code is further processed through the intermediate representation and transitional representations, more modifications are performed that cannot be changed later. When the binary object code is produced one has lost the opportunity to instrument the code without great expense.

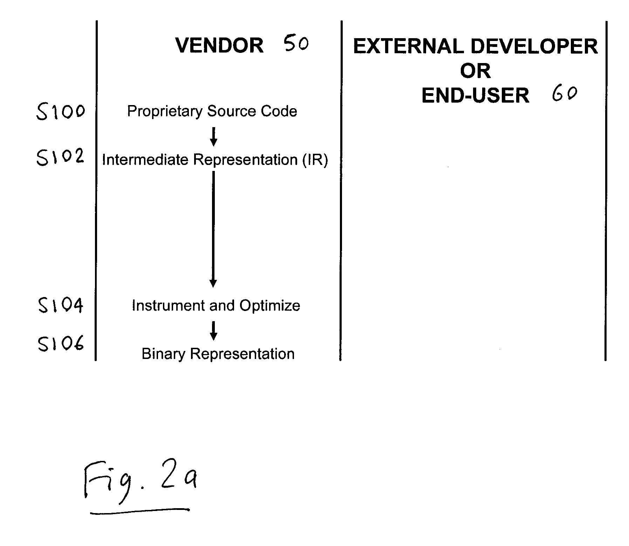

Figure 2a shows the conventional method of making a proprietary library available to the developer or end-user.

The first stage (step S100) is for the vendor 50 to write the library source code, typically using a high-level language such as C. "High-level" in this context refers to a high degree of abstraction from the details of the computer, freeing the programmer from having to consider the properties of the target system. The source code has to be compiled (S102) to arrive at binary code (object code) suitable for execution on a target system. Normally, such compilation takes place in several stages, involving scanning, parsing and analysis of the source code and employing one or more intermediate representations (IRs). Generally, the stages of compilation take place sequentially at least to some extent, each IR being progressively more detailed and less abstract, in other words lower-level, than the previous one.

Intermediate representations are normally based around a graph-like structure which represents the structure of the program at a relatively high level of abstraction. Closest to the source code is the so-called concrete syntax tree. Next, for example, the code may be arranged to form an abstract syntax tree (AST): the AST is found by parsing the source code, representing the syntax of the source code as a tree of nodes representing constants or variables (the "leaves" of the tree) and operators or statements (the inner nodes of the tree). Other known forms of IR (at roughly the same level of abstraction) include Elcor, VEX and GCC GENERIC. Such IRs may occupy much more storage space than object code.

As well as intermediate representations, other forms of representation of the program code include assembly (or assembler) language, register transfer language (RTL) and bytecode. Assembly language and RTL are low-level but human-readable languages, whereas bytecode is a form of executable code which allows some independence of the target system. For example, Java bytecode runs on a virtual machine in the target system. Further compilation (or dynamic translation - also called just-in-time compilation) is needed to execute bytecode. By contrast, object code is usually target-specific, that is, tailored to run on a specific computer system, but can be executed directly.

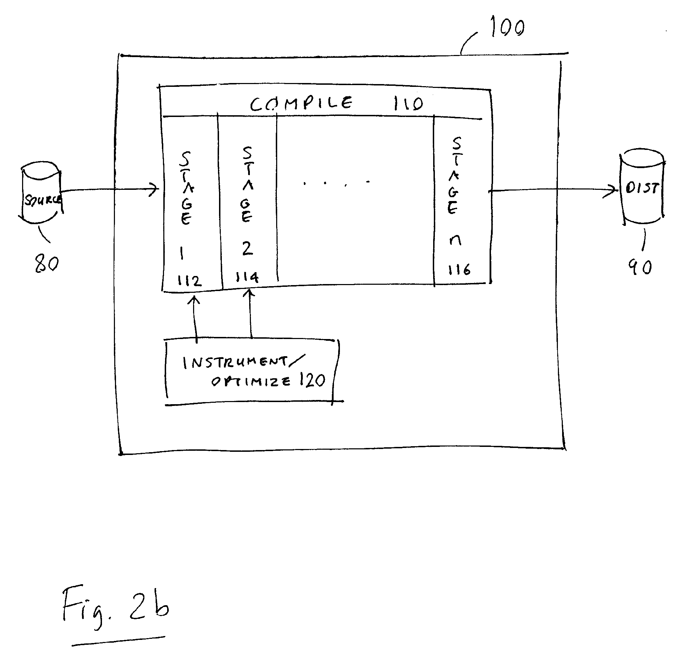

Conventionally, any instrumentation of the library (S104) needs to be added by the vendor. Also (whether at the same time, before or after instrumenting is unimportant), various forms of optimization are possible. After that, the instrumented and optimized code is further compiled to produce the binary representation (object code) (S106), which is then made available to the developer or end-user via a disk or download. Figure 2b schematically shows a vendor-side computer system suitable for the above method. The source code written in step S100 is indicated by SOURCE 80. This is supplied to conventional computer system 100, which implements a compile process 110 and an instrument and/or optimize process 120. These are shown for the purposes of illustration as distinct processes although in practice, of course, both are normally executed by the processor and storage of the same computer system.

As already described, compilation is made up of different stages, labelled here as "STAGE1" 112, "STAGE 2" 114 and ending with "STAGE n" 116. The first stage 112 receives the source code after any preprocessing, and is sometimes called a "front end" of the compiler, the final stage 116 forming the "back end". Instrumentation, typically in the form of special instructions added to the source code, is normally applied to the higher levels (earlier stages) of compilation. The output from the final stage 116 is a distributable file DIST 90 which is the binary representation yielded by step S106 in Figure 2a. This file is then written to disk or made available via the network, to distribute the binary representation to the developer or end-user.

Thus, in the conventional method, all desired instrumentation and low level modification of the proprietary library must be performed by the vendor 50 (originator of the library) and a binary is given to the external developer or end-user 60 (both customers of the vendor). Obviously, such instrumentation is confined to each library in isolation, and cannot take into account the use to which the library may be put by the developer or end-user. Having received the binary, the developer or end-user 60 would only be able to instrument the library using DBI as mentioned above.

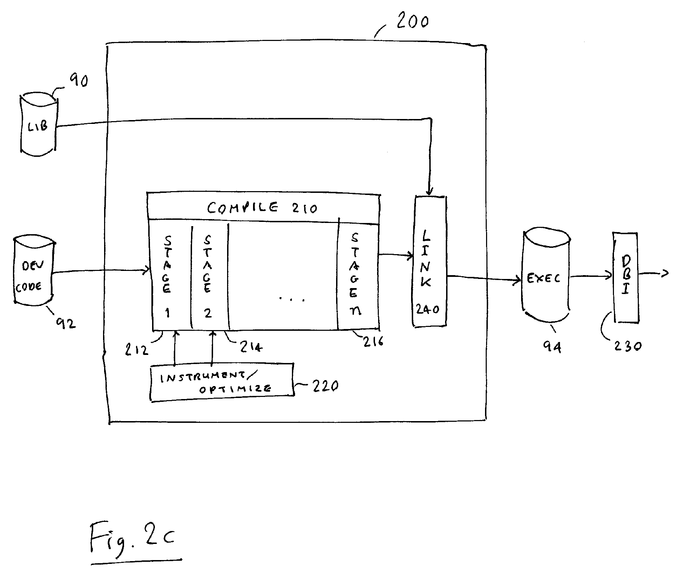

Figure 2c illustrates the processes performed in this case by a conventional computer system at the developer or end-user side. The binary is received in the form of library 90, and optionally modified using DBI as just mentioned, as indicated at 230.
Meanwhile, the developer's own code may need to be compiled, and again this may be done in a plurality of stages 212, 214 to 216 as indicated by the compile process 210 in the Figure. The developer or end-user 60 may choose to instrument their own code as shown at 220. Then, the developer's own compiled code needs to be combined with the already-compiled library in some way, for example by a link process (linker) 240. The result is a final executable binary 94 including all the required libraries.

An aspect of the present invention is a method of providing proprietary software libraries that allows instrumentation to be performed by a person who has been supplied with the proprietary library; either a developer using the library or an end-user of an application, or both. The developer and end-user may in fact be the same entity.

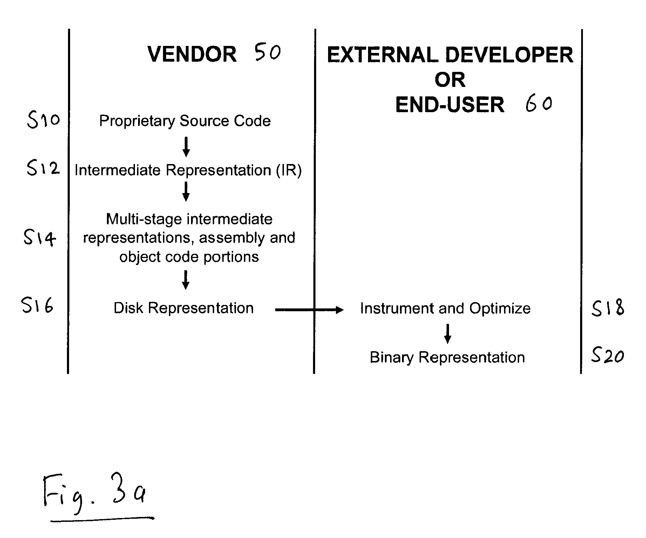

Figure 3a shows a method for distributing software, more particularly a proprietary software library, provided in an embodiment of the present invention.

As before (Figure 2a), as a first step (S10) the vendor 50 writes the source code for the library or libraries. Also, as before, the source code is translated (S12) into one or more stages of intermediate representation. The difference in this embodiment is that, instead of performing all instrumentation on the vendor side and compiling the whole of the library to object code, the method of the invention provides as output (S14) at least part of the respective results of different stages in the compilation process. That is, the method stores the code for different parts of the library in a variety of forms: as intermediate representations of any of a plurality of types, assembly code, and possibly also some portions in bytecode and/or object code. This is labelled as "Disk Representation" in step S16 of Figure 3a.

Having delivered the disk representation to the developer or end-user 60, the latter can then add their own instrumentation and/or optimization (S18) before producing the final binary representation (S20). In this way, the method of the invention allows the external developer or end-user 60 (both customers of the vendor) to perform custom instrumentation and other low level modifications of the proprietary library, or at least of those portions provided in a suitable representation. Here, possible modifications include optimizations such as removal of redundant operations and re-ordering of code.

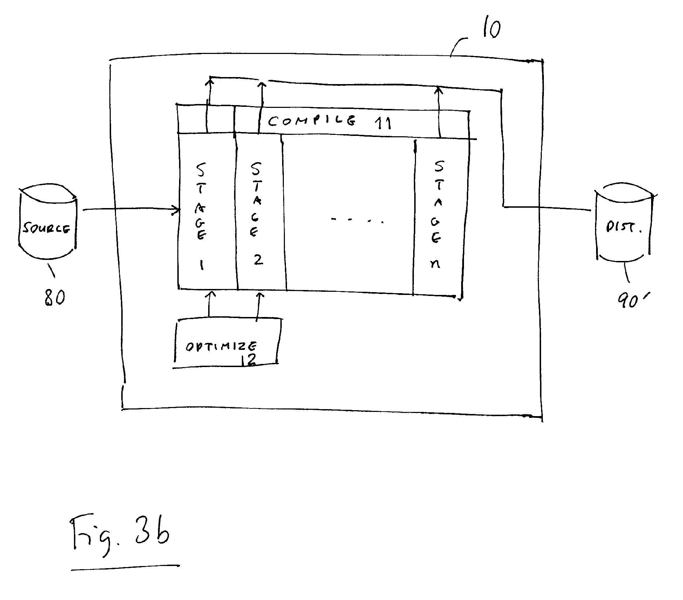

Figure 3b shows the modification to the processes carried out in the computer system on the vendor 50 side. As before, the source code 80 is supplied to the computer system 10, which implements a multi-stage compile process 11. What has changed is that rather than providing only the output of the final stage (STAGE n) as output, with the intermediate representations being held only temporarily in the internal stage of the system, one or more of these intermediate representations are output as parts of the code for distribution, producing a distributable 90'. Details of how this is managed will be described later. Another change is that, whilst it is still possible for the vendor 50 to add instrumentation to the proprietary library, this is less necessary as the developer or end-user 60 can now do so. Thus, an optimize process 12 is shown to indicate that instrumentation need not be performed on the vendor side.

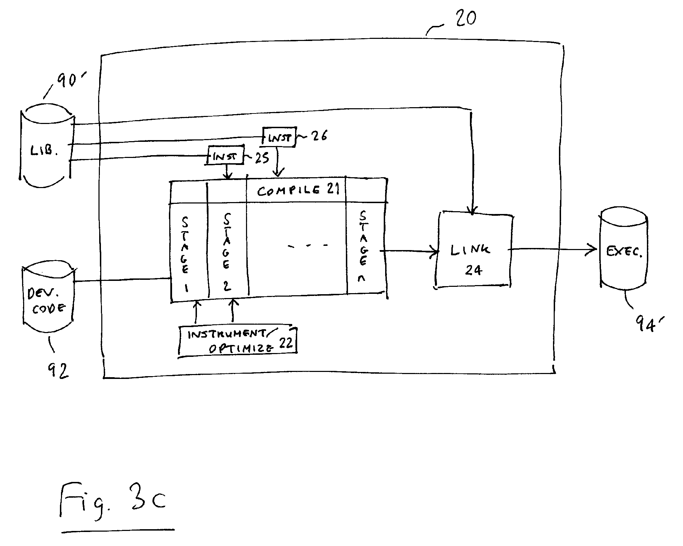

Figure 3c shows a suitable configuration of the computer system 20 on the developer/end-user side. Note that this computer system need not be physically possessed by the developer or end-user and might be in any location, even provided on a service basis by the vendor. The system receives the modified distributable in the form of one or more libraries 90', in addition to the developer's own source code 92. The source code is compiled in a multi-stage process 21 as before, and at each stage, instrumentation and/or optimization may be applied as indicated by process 22. The difference is that such instrumentation and/or optimization are also possible for parts of the library 90' as indicated by INST 25 and 26. The code portions may either be fed into the same compile process 21 as the developer code, or compiled separately prior to linking at 24 to form the executable 94'. The executable 94' differs from the conventional binary file 94' in that its libraries as well as the developer 60's own code can be instrumented and/or optimized.

Thus, the instrumentation and any optimization can be applied to the whole program including function calls to the libraries. This is not possible with the state of the art and represents a huge performance increase over the option of using dynamic binary instrumentation (in the case of the Valgrind package, dynamic instrumentation causes a four to over ten times increase in walltime - the dynamic instrumentation component of this can be eliminated).

Meanwhile, retaining at least some portions of the library code in a low-level representation such as bytecode or object code reduces the risk of the developer or end-user 60 recovering the original source code, thus allowing trade secrets to be preserved.

An example end-user program, written in C, is shown. The end-user program uses one user library function for which the source code is available and one proprietary function from a proprietary library. The user library function calls the same proprietary function but carries out a more intensive calculation. In addition, the user library function introduces an error in the form of an uninitialized variable which is employed in calculating the input to the proprietary function.

```
 /* file: programl.c */
 void source_code_available_function1 ( void*, void* );
 /* source_code_available_function1 defined in separate
 translation unit. */
 
 void proprietary_function1 ( void*, void* );
 /* Proprietary library is linked later. */
 
 int main ( int argc, char *argv[] ) {
      void *datal, *data2;
 
      /* data1 and data2 are assigned. */
      /* Various other tasks. */
 
      source_code_available_functionl (data1, data2);
      proprietary_functionl ( data1, data1 );
 }
```

The user may compile an application without any instrumentation:
"cc programl.c -luserlib -lproprietarylib"
where "cc" is the basic compilation command. The user may select simple instrumentation of user code which is a technical transformation of the program from purely performing its function to perhaps performing many additional functions:
"cc -p programl.c -luserlib -1proprietarylib"
where "-p" (or sometimes "-pg") invokes profiling instrumentation to count how many times functions are called and to establish chains of calls between functions.

The invention increases the extensiveness of this technical transformation such that the technical transformation is also applied to proprietary functions and with the minimum performance penalty. An example of a compile command in the present invention is:
"cc -K{pinst,nopinst} programl.c -luserlib -lproprietarylib"
where the switch or option "-K" invokes profiling instrumentation in accordance with the present invention, which is capable of including the proprietary libraries in addition to the developer's own code. Here, as option arguments applied to the option "K", "pinst" instructs the compiler to perform profiling instrumentation also in the proprietary library and "nopinst" instructs the compiler not to perform this instrumentation. Alternative arguments might include "propinstp" to give profiling instrumentation and "propinstmem" to add memory correctness checking instrumentation.

Standard sampling-based profiling shows only the basic estimate of the time spent in the proprietary function but is unable to record the number of calls made and unable to give any breakdown of how the function is used, as shown below (times are unavailable for the proprietary function).

| Each sample counts as 0.01 seconds. | | | | | | |
|---|---|---|---|---|---|---|
| % | cumulative | self | | self | total | |
| time | seconds | seconds | calls | Ts/call | Ts/call | name |
| 100.85 | 0.20 | 0.20 | | | | proprietary_function1 |
| 0.00 | 0.20 | 0.00 | 1 | 0.00 | 0.00 | source code available function1 |

Standard callgraph-based profiling is unable to record which functions have called the proprietary function and so uses the label "spontaneous" as shown below

| index | % time | self | children | called | name |
|---|---|---|---|---|---|
| | | | | | <spontaneous> |
| [1] | 100.0 | 0.20 | 0.00 | | proprietary_functionl [1] |
| | | 0.00 | 0.00 | 1/1 | main [9] |
| [2] | 0.0 | 0.00 | 0.00 | 1 | source_code_available_function1 [2] |

Thus, whilst sampling- and callgraph- based profiling are known, neither technique in itself is of much use for investigating proprietary libraries where these are available only as object code in the conventional manner.

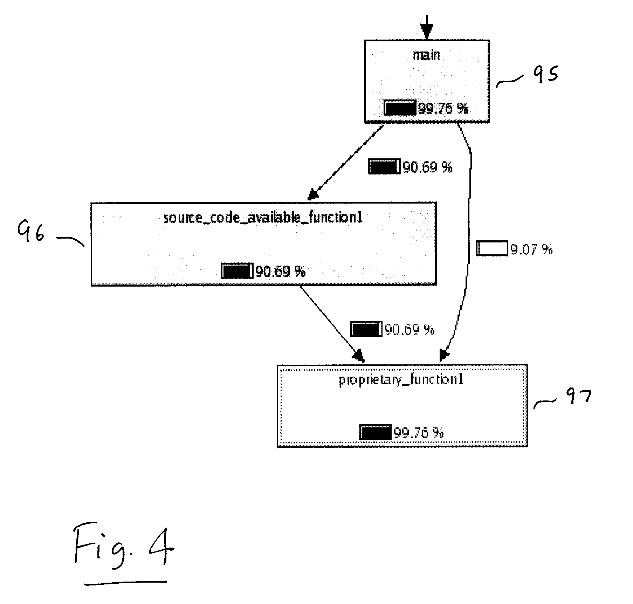

Embodiments of the present invention allow more detailed information to be obtained even when program execution continues through proprietary functions in proprietary libraries. To give one example, detailed callgraph information may be collected and output in the Callgrind Profile Format which allows processing and visualization using standard tools. Figure 4 shows that there is one expensive call and one inexpensive call to the proprietary function.

Figure 4 illustrates how instrumentation of proprietary libraries allows a more complete transformation of the user program with minimal performance impact. In this simplified example, a main function 95 (representing the whole executable program) calls a function 96 for which the source code is available (e.g. written by the developer or end-user). This function in turn invokes a library function 97 which is instrumented by use of the present invention.

It can be seen that the detailed callgraph shows the proprietary function 97 is called from two places with differing costs. One call arc is cheap, 9.07% whereas the call arc though the user function 96 is expensive, 90.69%. In other words execution expends time overwhelmingly as a result of function 96, indicating where efforts for optimization should be focussed.

Figure 4 is a simplified example. Rather than only two points at which the program spends time, in practice there may be hundreds of such locations. It should also be noted that Callgrind Profile Format is only one of many available tools for visualizing callgraph information.

Use of the method of the invention described above allows instrumentation of the proprietary function in order to check for programming errors such as use of uninitialized values without suffering an unacceptable runtime penalty with dynamic binary instrumentation.

The output below shows that the memory error checking instrumentation functionality has detected that an uninitialized value was used in the proprietary function and that this uninitialized value was created by the specified user library function on the last line.

| | |
|---|---|
| ==1234== | Conditional jump depends on uninitialized value(s) |
| ==1234== | 0x40085D: proprietary_function1 (proprietarylib.a) |
| ==1234== | 0x400818: source_code_available_function1 (userlib.c:10) |
| ==1234== | 0x4007C4: main (program1.c:17) |
| ==1234== | Uninitialized value created by a stack allocation |
| ==1234== | 0x4007DC: source_code_available_function1 (userlib.c:6) |

As is usual, execution of the program takes place via standard streams provided in the Unix C runtime environment for input and output of information. In particular, "standard out" is the stream for output of program results, and "standard error" is the stream for error messages. Typically, both are mapped to a terminal screen of the executing system for monitoring by a user. In this case, the instrumented program sends output to either standard out or standard error which may be subsequently redirected to a file, but no explicit data recording disk format (e.g. XML of HTML) is required.

The proprietary library is at least partially saved to disk before either the object binary or byte-code stage and this allows later instrumentation and other low level modification of the software library. By contrast, conventional practice is to save object binaries, byte-code, or mock object files (as in Intel's interprocedural optimization or IPO) containing intermediate representation purely on a temporary basis as part of the compilation process, and in a strategy which requires the source code.

An embodiment of the present invention saves a proprietary software library as multi-stage intermediate representations and object code portions alongside the machine code object libraries (for which the distribution format remains unchanged). Thus, the library is supplied purely in machine-readable object code as before but in addition, as a multi-stage representation allowing instrumentation at the developer or end-user side.

The disk format (distribution format) will be highly compiler dependent and proprietary. To give an example, the free GNU Compiler Collection (GCC) uses a range of intermediate representations including the family known as GIMPLE. The method of the invention saves the partially compiled proprietary library to disk where different parts of the library have progressed to different stages of the process so there will be a mixture of portions of intermediate representations (such as the GIMPLE family), machine-dependent assembly code and portions of machine-dependent object code.

The process can be summarised by the following table:

| **Steps of the embodiment** | **Effect** |
|---|---|
| Preparational step: the vendor of a software compiler modifies the compiler so that multi-stage intermediate representations, assembly and object code portions of the software library are written to a proprietary disk representation. | This is a novel way of distributing proprietary software libraries and the combination of assembly, object code and multi-stage intermediate representations allows instrumentation and modification by a developer or end-user. |
| Proprietary source code is partially compiled so that different portions of the code reach different stages of intermediate representation and assembly, object code in order to allow instrumentation yet reserve specific techniques as proprietary. | This is a novel way of partially compiling source code. Usually compilation is carried out to a predetermined stage: an architecture neutral distribution format, byte code, assembly or object code. |
| Output of multi-stage intermediate representation and object code portions to disk for delivery as a software library. Loading of this by the library user and possible instrumentation and other low level modifications. | This is a novel way of saving a proprietary software library for distribution and is an improvement in terms ease of implementation as compared to architecture neutral distribution formats. |

In the above table, it is assumed that the library is saved to disk for distribution, but the library could equally well be made available for download from the vendor's website, in the same or equivalent format.

The invention is directed at adding a new functionality to existing compilers in a way that is not overly burdensome to the compiler developers. The disk representation described in the invention is not a distribution format *per se:* the library distribution format will remain machine code so that all existing functionality is retained. The disk representation enabling the invention to be performed is a compiler-dependent and compiler version-dependent convenience representation which is supplied in addition to the machine code.

In its most basic form, these disk representations save the internal state and serialized structures of the compiler at a certain point during processing of the proprietary library source code. Although the exact layout of the library file is not important, as a guide, the implementer may use a customisation of the Executable and Linkable Format (ELF) without a program header table and using customized section names. ELF is the most common file format used for Unix executables and libraries.

The representation saved to disk is expected to be lower level than the concrete syntax tree (parse tree) to ensure that recovery of the proprietary source code is unfeasible. The code may be divided into sections with representations arranged in a hierarchical manner, higher levels referring to successive lower levels. The highest level information may include portions of the abstract syntax tree. Other portions away from the root of the tree may be in a compiler-dependent intermediate representation. As an illustration, these portions may be similar in structure to Elcor IR, VEX IR or GCC GENERIC. (GCC GENERIC is a more complex alternative to GIMPLE which was mentioned earlier).

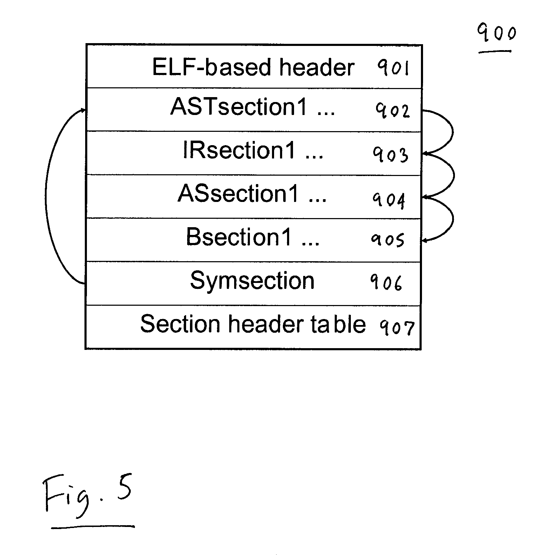

Yet other portions may be in a register transfer language and assembly. The leaves of the tree structure may be in machine code if the proprietary library developer requests this in source code directives. A file layout 900 demonstrating this hierarchical structure is shown in Figure 5.

The proprietary (library) functions provided by this file are described in Symsection 906 (symbol section: symbols are used to refer to external functions), which link to an appropriately numbered ASTsection1 902 for abstract syntax tree level structures. Chains of links may then be established as illustrated by arrows down to appropriately indexed intermediate representation (IRsection1 903), register transfer language and assembly (ASsection1 904) and machine code (Bsection1 905) sections. As indicated by the dots in the Figure, there may be several sections at each level. These chains of links may miss out certain levels as appropriate. In other words, not every level of the hierarchy illustrated here need be present in the saved library file, in every instance. On the other hand, as already indicated, lower levels may be present at least for some sections; in particular certain parts of the tree may point to a bytecode or machine code level. In accordance with the known ELF format, a Section header table 907 may be present to list the sections so as to facilitate navigation.

As a minimum, it would be sufficient, in an embodiment of the present invention, to provide portions of the library code at one level of intermediate representation with other portions as object code. More normally, it is envisaged that two or more levels (or types) of intermediate representation would be used, with or without object code. The two levels might be a first level which is relatively easy to derive from source code and a second level which is well suited for further processing. The mixture of representations should preferably be fine-grained, in other words the library should preferably be divided into a large number of portions or sections to be saved in different representations. Thus, there will normally be a distinct set of code portions (sections or functions) at each level of intermediate representation.

The library code is thus distributed to the developer or end-user who then loads it into their own computer system running a modified compiler, adapted for processing the library code saved to different intermediate representations. An input reader or loader of the developer system/ compiler identifies portions of the library which have different representations, for example by using the Section Header Table in the ELF-type format shown in Figure 5. Appropriate sections of the library code are then processed by different stages of the compiler as required to produce object code. In doing so, instrumentation is added where possible, as needed. The resulting portions of instrumented object code are combined to form the executable program which can then be executed and profiled using the instrumenting code.

To summarize, an embodiment of the present invention can provide a compiler allowing access to proprietary libraries for instrumentation purposes. At a vendor 50 side, the compiler is modified so that different portions of the proprietary source code S10 are compiled to different stages S12, S14 and these portions are saved to disk S16 as a combination of both higher and lower intermediate representations, assembly and object code portions for distribution to an external software developer or end-user 60, who is then able to instrument and perform custom optimization S18 of the proprietary library.

## Claims

1. A method of distributing software for instrumentation comprising:
creating source code of the software;
compiling the source code into a plurality of portions having different representations, at least one of said representations being suited to instrumentation; and
distributing the software with said portions having different representations.

2. The method according to claim 1 wherein the software is in the form of one or more proprietary libraries.

3. The method according to claim 1 or 2 wherein the representations include one or more intermediate representations generated during said compiling.

4. The method according to claim 3 wherein the intermediate representations include an abstract syntax tree.

5. The method according to claim 3 wherein the intermediate representations include a compiler-dependent intermediate representation.

6. The method according to any preceding claim wherein the representations include at least one of assembly code, virtual machine-executable code, and object code.

7. The method according to any preceding claim wherein the distributing comprises providing a hierarchical file structure for said portions having different representations.

8. The method according to claim 7 wherein said hierarchical file structure is based on executable and linkable format (ELF).

9. The method according to claim 7 or 8 wherein the distributing further comprises writing the software to a disk having said hierarchical file structure.

10. The method according to any preceding claim further comprising distributing the software in the form of object code in addition to distributing the software with said portions having different representations.

11. A computer system for forming a distributable software product by compiling object code from source code via a plurality of intermediate representations and comprising:
a processor configured as:
a first compiling stage for producing an output in the form of a first intermediate representation, from the source code;
a second compiling stage for producing an output in the form of a second intermediate representation, from the first intermediate representation; and
a final compiling stage for producing an output in the form of object code, from a said intermediate representation at or following said second stage; and
a storage for storing the output of each of said stages;
wherein the processor is arranged to combine a portion of the output from a plurality of said stages to form said distributable software product.

12. A computer system for instrumenting a proprietary library and comprising:
storage means arranged for storing the proprietary library in a form in which portions of the proprietary library have different representations, at least one of said representations allowing instrumentation to be added;
compiling means configured to perform a plurality of compile processes each provided for a respective one of said different representations; and
instrumenting means for adding, in the respective compile process, instrumentation to each portion of the proprietary library which is in a representation allowing instrumentation.

13. A compiler for forming a software product by creating object code from source code via a plurality of intermediate representations and comprising:
a first processing stage for producing an output in the form of a first intermediate representation, from the source code;
a second processing stage for producing an output in the form of a second intermediate representation, from the first intermediate representation; and
a final stage for producing an output in the form of object code, from a said intermediate representation at or following said second stage; wherein
said compiler combines a portion of the output from each of said stages to form said software product.

14. A compiler for instrumenting a proprietary library, the compiler comprising:
a plurality of compile stages each adapted to process code having a different respective representation, at least one of which representations allows instrumentation to be added;
an input reader for loading the proprietary library and identifying portions of the proprietary library having different representations; and
an instrumenter for adding instrumentation to each portion of the proprietary library which is in a representation allowing instrumentation.

15. The computer system according to claim 11, or the compiler according to claim 13, wherein the software product is a proprietary library and at least one of the intermediate representations is suitable for instrumentation.

## Amended claims

### Amended claims in accordance with Rule 137(2) EPC.

**1.** A method of distributing software (90') for instrumentation, the software including a proprietary library constituted by a plurality of functions in a hierarchical structure, the method comprising:
creating (S10) source code (80) of the software;
compiling (S12, S14) the source code, by multiple compilation stages, into a plurality of portions each corresponding to a distinct set of functions in said structure, the respective portions having different representations including at least one intermediate representation prior to a final compilation stage and allowing instrumentation as needed by a user (60); and
distributing (S16) the software (90') with said portions having different representations.

**2.** The method according to claim 1 wherein the intermediate representations include an abstract syntax tree (902).

**3.** The method according to claim 1 wherein the intermediate representations include a compiler-dependent intermediate representation (903).

**4.** The method according to any preceding claim wherein the representations include at least one of assembly code (904), virtual machine-executable code (905), and object code.

**5.** The method according to any preceding claim wherein the distributing (S16) comprises providing a hierarchical file structure (900) for said portions having different representations.

**6.** The method according to claim 5 wherein said hierarchical file structure (900) is based on executable and linkable format (ELF).

**7.** The method according to claim 5 or 6 wherein the distributing (S16) further comprises writing the software to a disk having said hierarchical file structure (900).

**8.** The method according to any preceding claim further comprising distributing the software in the form of object code in addition to distributing (S16) the software with said portions having different representations.

**9.** A computer system (10) for forming a distributable software product (90') including a library constituted by a plurality of functions in a hierarchical structure, by compiling object code from source code (80) via a plurality of intermediate representations and comprising:
a processor configured as:
a first compiling stage (STAGE 1) for producing an output in the form of a first intermediate representation, from the source code;
a second compiling stage (STAGE 2) for producing an output in the form of a second intermediate representation, from the first intermediate representation; and
a final compiling stage (STAGE n) for producing an output in the form of object code, from a said intermediate representation at or following said second stage; and
a storage for storing the output of each of said stages;
wherein the processor is arranged to form said distributable software product (90') by saving the constituent functions of the library as respective sets of functions in different said intermediate representations, at least one of which intermediate representations allows instrumentation as needed by a user (60).

**10.** A computer system (20) for instrumenting a proprietary library (90') constituted by a plurality of functions in a hierarchical structure, the system comprising:
storage means arranged for storing the proprietary library in a form in which portions of the proprietary library each corresponding to a distinct set of functions in said structure have respectively different representations, at least one of said representations allowing instrumentation to be added;
compiling means (21) configured to perform a plurality of compile processes each provided for a respective one of said different representations; and
instrumenting means (25, 26) for adding, in the respective compile process and as needed by a user, instrumentation to each portion of the proprietary library (90') which is in a representation allowing instrumentation.

**11.** A compiler for forming a software product (90') by creating object code from source code (80) via a plurality of intermediate representations, the software product (90') including a proprietary library constituted by a plurality of functions in a hierarchical structure, the compiler comprising:
a first processing stage (STAGE 1) for producing an output in the form of a first intermediate representation, from the source code;
a second processing stage (STAGE 2) for producing an output in the form of a second intermediate representation, from the first intermediate representation; and
a final stage (STAGE n) for producing an output in the form of object code, from a said intermediate representation at or following said second stage; wherein
said compiler forms said software product (90') by saving the constituent functions of the library as respective sets of functions in different said intermediate representations, at least one of which allows instrumentation as needed by a user (60).

**12.** A compiler for allowing a user (60) to instrument a proprietary library (90') constituted by a plurality of functions in a hierarchical structure, the compiler comprising:
a plurality of compile stages (STAGE 1, STAGE 2, ... STAGE n) each adapted to process code having a different respective representation, at least one of which representations allows instrumentation to be added;
an input reader for loading the proprietary library (90') and identifying portions of the proprietary library having respectively different representations and each corresponding to a distinct set of functions in said structure; and
an instrumenter (25, 26) for adding instrumentation as needed by the user to each portion of the proprietary library (90') which is in a representation allowing instrumentation.
